(19)
Europäisches
Patentamt

European
Patent Office

Office européen
des brevets

(11) **EP 3 526 650 B1**

(12) **EUROPEAN PATENT SPECIFICATION**

(45) Date of publication and mention
of the grant of the patent:
**25.05.2022 Bulletin 2022/21**

(21) Application number: **17798320.2**

(22) Date of filing: **17.10.2017**

(51) International Patent Classification (IPC):
***G05D 1/02*** *(2020.01)*

(52) Cooperative Patent Classification (CPC):
**G05D 1/0206**

(86) International application number:
**PCT/IB2017/056425**

(87) International publication number:
**WO 2018/073731 (26.04.2018 Gazette 2018/17)**

(54) **METHOD FOR AUTOMATICALLY CONTROLLING THE MOORING MANEUVER OF A BOAT WITH RESPECT TO AN OBJECT AND ASSOCIATED SYSTEM**

VERFAHREN ZUR AUTOMATISCHEN STEUERUNG DER VERTÄUUNGSMANÖVER EINES BOOTES IN BEZUG AUF EIN OBJEKT UND ENTSPRECHENDES SYSTEM

PROCÉDÉ DE COMMANDE AUTOMATIQUE DE MANOEUVRE D'AMARRAGE D'UN BATEAU PAR RAPPORT À UN OBJET ET SYSTÈME ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2016 IT 201600103908**

(43) Date of publication of application:
**21.08.2019 Bulletin 2019/34**

(73) Proprietor: **Fincantieri Nextech S.p.A.
20123 Milano (IT)**

(72) Inventors:
• **SEBASTIANI, Luca
16129 Genova (IT)**
• **CONCIALINI, Alessandro
16129 Genova (IT)**

(74) Representative: **Mozzi, Matteo
Jacobacci & Partners S.p.A.
Via Senato, 8
20121 Milano (IT)**

(56) References cited:
**EP-A1- 2 824 528       JP-A- 2005 255 058
US-A1- 2007 073 454**

EP 3 526 650 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of application

The present invention relates to the field of systems for automatically controlling the movements of a boat on the horizontal plane and in particular to a method for automatically controlling the mooring maneuver of a boat with respect to an object and related system.

Technological background

It is known that some types of boats, such as for example offshore platform support boats, are equipped with dynamic positioning systems for automatically controlling the position with respect to land which have evolved over time.
Indeed, the dynamic positioning systems were initially developed to automatically hold the position and the heading of a ship while carrying out particular operations (e.g. drilling the sea bed) in bad weather conditions by means of feedback of the actuators according to the holding/heading error.
Typically, these dynamic positioning systems consist of: a satellite sensor for the position reference, a gyroscopic sensor for the heading reference, an anemometric sensor for the environmental reference, a set of actuators capable of moving the ship freely on the water plane, an electronic processor for feedback-controlling the actuators according to the data received from the sensors.
The actuators are not strictly part of a dynamic positioning system even though they form an enabling system for carrying out the control functions processed by the system itself.
The number, position and type of actuators may be arbitrary, providing they are capable of independently supplying a longitudinal force, a transverse force and a moment with respect to the vertical passing amidship.
The dynamic positioning systems have then evolved, including additional sensors such as, for example, distance/relative distance sensors with respect to an external stationary or moving object of the hydro-acoustic or electro-optical or microwave type, and more complicated automatic control functions of the ship motions, such as for example: the capability to keep a support boat at given distance with respect to the side of an offshore platform indefinitely, also in bad weather conditions, without any manual intervention by the operator and without needing to use mooring ropes/fenders (*"hold distance"* function); the capability of advancing or proceeding with backwards at a given speed, limiting the side swerving and the rocking of the bow at the same time (*"piloting"* function); the capability of moving sideways at a given speed, limiting the longitudinal movements and the rocking of the bow at the same time ("*crabbing*" function).
It is known that approaching the mooring quay, for example in the case of a large-size luxury yacht (also known as "Mega-Yacht" or "MY") in a very busy marina in unfavorable wind conditions, is a critical condition which implies a high risk of collision into the quay or other vessels, and therefore requires high seafaring experience and skills which are not always available on boats of this type.
With this regard, the aforesaid dynamic positioning systems were later modified to support the approaching maneuver to the mooring quay of a boat by means of appropriate combinations of the aforesaid automatic *"piloting"*, *"crabbing"* and *"hold distance"* functions.
Nowadays, in a continual evolution of the dynamic positioning systems, the need is strongly felt to be able to guarantee a mooring maneuver of a boat which is as accurate and reliable as possible, completely autonomous and safe, also in bad weather conditions (e.g. cross winds of a given intensity) from the area chosen for starting the mooring maneuver to the position for mooring on the quay.
EP2824528 A1 discloses a programmable automatic docking system for a marine vessel, wherein the programmable automatic docking system includes a set of starboard side transducers and a set of port side transducers to detect and transmit real-time distance, position and velocity information of the marine vessel in relation to an external object.
JP 2005 255058 A discloses an automated pier-docking/mooring device and automatic pier-docking/mooring method of ship.

Summary

It is the object of the present invention to devise and make available a method for automatically controlling the mooring maneuver of a boat with respect to an object which makes it possible to avoid at least partially the drawbacks described above with reference to the known art and in particular which can fulfill the aforesaid need as much as possible.
Such object is achieved by a method according to claim 1.
A system according to claim 15 is a further object of the present invention.

Brief description of the figures

Further features and advantages of the method and system according to the invention will be apparent from the following description of preferred embodiments, given by way of indicative, non-limiting examples, with reference to the accompanying figures, in which:

- figure 1 shows, by means of a functional block chart, an automatic control system of the mooring maneuver of a boat with respect to an object, according to an embodiment of the invention;
- figure 2 diagrammatically shows a first example of boat with some components of the system in figure 1;
- figure 3 diagrammatically shows a second example of boat with some components of the system in figure 1;
- figure 4 diagrammatically shows the second example of boat in figure 3 with further components of the system in figure 1;
- figures 5, 6 and 7 diagrammatically show a portion of a boat and an obstacle during the different steps of the automatic control method of the mooring maneuver of a boat with respect to an object, according to an embodiment of the invention;
- figure 8 shows by means of a block chart an automatic control system of the mooring maneuver of a boat with respect to an object, according to an embodiment of the invention, and
- figures 9 and 10 show examples of implementation of the automatic control system of the mooring maneuver of a boat with respect to an object, according to an embodiment of the invention.

Detailed description

A system 100 for automatically controlling the mooring maneuver of a boat with respect to an object, hereinafter also automatic control system or simply system, according to an embodiment of the invention, will now be described with reference to the figures.

It is worth noting that equal or similar elements in the figures will be indicated by the same numeric and/or alphanumeric references.

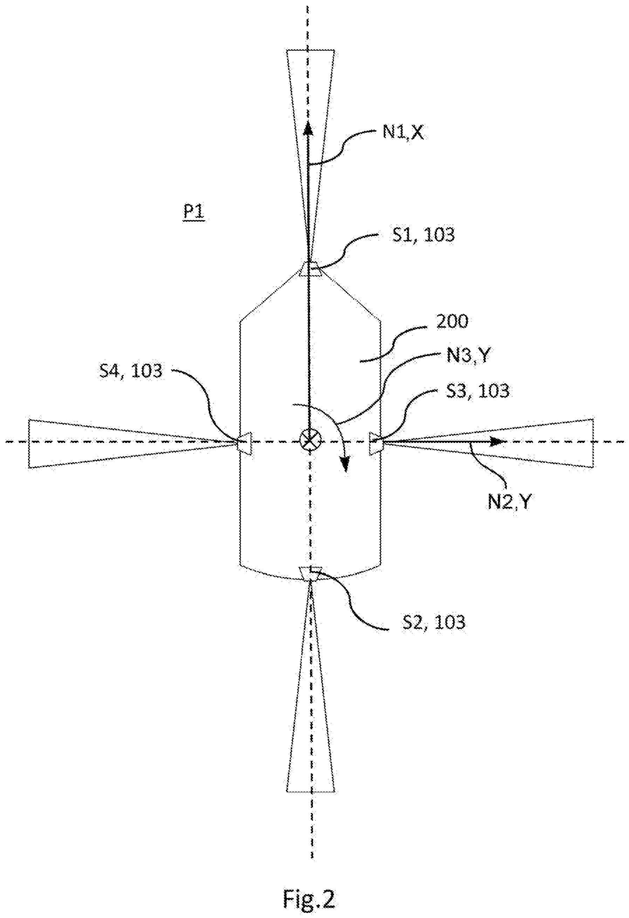

With particular reference to any one of the figures 2-7, 9 and 10, it is worth noting that the boat, indicated by reference numeral 200 in the figures, is adapted to perform the mooring maneuver on a respective maneuver plane P1, corresponding to the water plane.

More in detail, the boat 200 has a first reference axis N1 (e.g. the longitudinal axis, also indicated as axis "X") passing through the boat center and orientated afore, a second reference axis N2 (also indicated as axis "Y") passing through the boat center, orthogonal to the first axis N1 and oriented astarboard, the first axis N1 and the second axis N2 lie on the maneuver plane P1, a third reference axis N3 (also indicated as axis "Z") passing amidship and oriented downwards, orthogonal to the maneuver plane P1.

The object, indicated in the figures by reference numeral 201, with respect to which the boat 200 is adapted to perform the mooring maneuver, develops parallel to a respective reference axis A1 (indicated by a dashed line in the figures) of the maneuver plane P1 of the boat 200.

For the purposes of the present invention, boat means any naval or nautical vessel, of small size (up to 30 meters long) or of large size (up to 80 meters or longer), which requires a specific mooring semi-automatic, automatic or manual maneuver, with respect to one or more objects arranged on the maneuver plane P1.

"Object" means any object developing parallel to the first reference axis A1 of the maneuver plane P1 of the boat 200, which the boat 200 must approach during the mooring maneuver and once it is completed. Examples of the object 201 may be the quay of a harbor, the side of another boat, the stern of another boat, and so on.

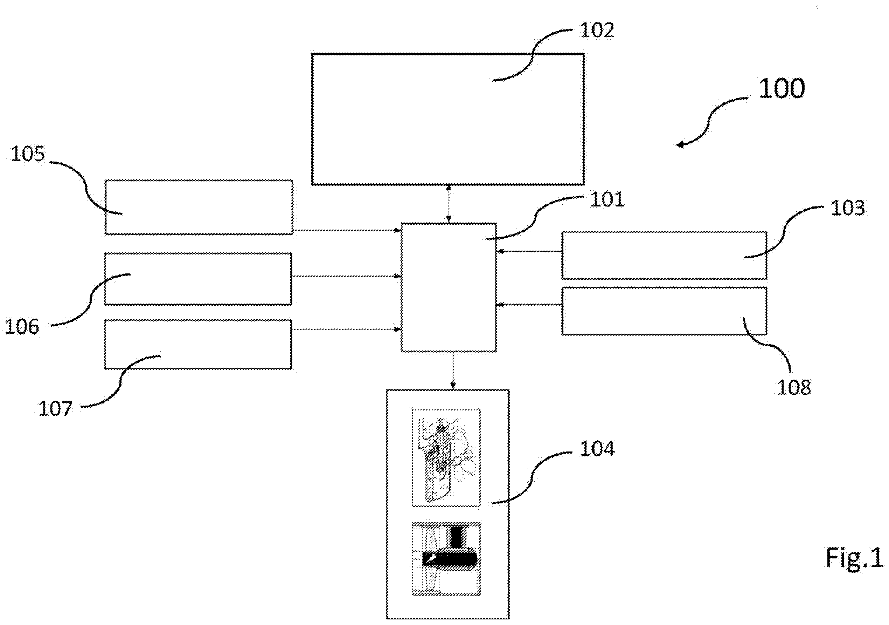

With reference to figure 1, the system 100 comprises a data processing unit 101, e.g. a microcontroller or a microprocessor.

The system 100 further comprises a memory unit (not shown in the figures), either inside or outside the data processing unit 101, configured to store both program codes (control logics) which can be loaded and executed by the data processing unit 101 to implement the method for automatically controlling the mooring maneuver of a boat with respect to an object, described below, and the data acquired and processed by the data processing unit 101 during the implementation of the aforesaid method and of any other automatic function the execution of which is performed by the data processing unit 101.

The system 100 further comprises an operator control panel 102, operatively connected to the data processing unit 101.

The control panel 102 is configured to allow an operator to impart controls to the data processing unit 101 and, consequently to the components of the system 100 operatively connected to them, as will be described below.

With this regard, the control panel 102 preferably comprises a plurality of physical controls, comprising, for example, a joystick type lever with three degrees of freedom having a lever for the two horizontal degrees of freedom, i.e. parallel to the maneuver plane P1 of the boat 200, and a knob for the rotational third degree of freedom, i.e. vertical with respect to the maneuver plane P1 of the boat 200, and a plurality of push buttons.

The control panel 102 further comprises a monitor, preferably implementing touchscreen technology, to allow the operator to interact with the data processing unit 101 and view the processed data.

Turning back to figure 1, the system 100 further comprises a plurality of distance sensors 103, each of which is operatively connected to the data processing unit 101.

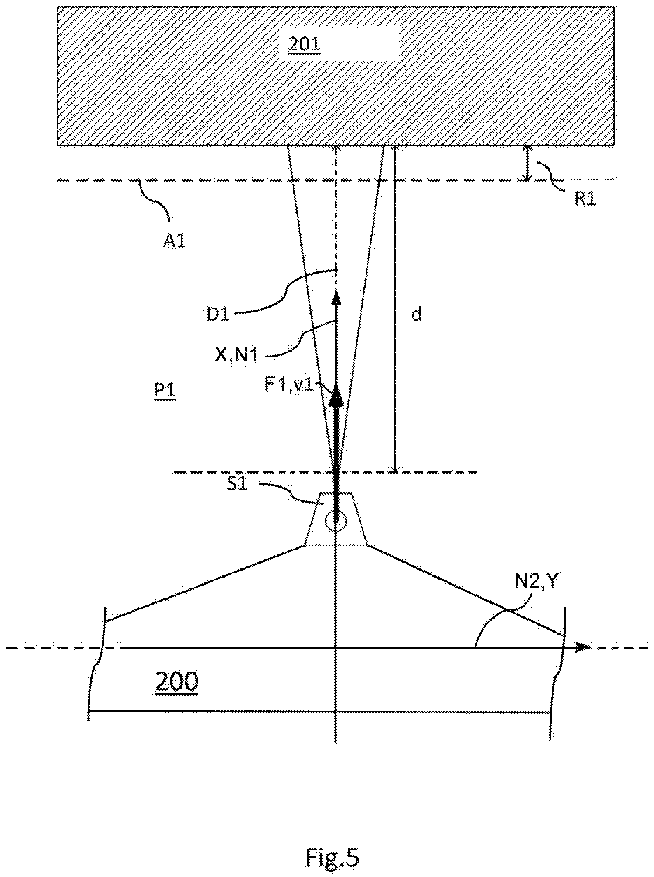

Now with reference to figures 5, 6 and 7, in which at least one distance sensor indicated by reference S1 is shown, it is worth noting that each distance sensor of said a plurality of distance sensors 103 is configured to detect a relative distance d between the distance sensor S1 and the object 201 along a direction D1 inclined with respect to a reference axis of the boat 200 by a set angle.

With this regard, it is worth noting that each distance sensor of said plurality of distance sensors 103 is configured to transmit a respective measuring signal along the direction D1 inclined with respect to the reference axis of the boat 200 by a set angle.

It is worth noting that in the case of a distance sensor arranged afore or astern, the reference axis is the first reference axis N1 of the boat 200 (also indicated as axis "X"), while in the case of a distance sensor arranged on the left or starboard, the reference axis of the boat 200 is the second reference axis N2 (also indicated as axis "Y").

Each distance sensor of the plurality of distance sensors 103 is preferably of the Radar type or other equivalent technology capable of ensuring a measuring range having as lower limit not less than 1 meter and as upper limit at least 100 meters for small-sized boats and at least 300 meters for large-size boats, with a measuring accuracy lower than 0.1 meters in the case of stationary objects or obstacles (e.g. the quay of a harbor or a moored boat).

With regards to the distribution of the plurality of distance sensors 103, the system 100 is modular because advantageously such distribution may freely vary in number and position along the outer perimeter of the hull of the boat 200 providing that an adequate covering of the sides of the boat 200 concerned by the mooring to the quay is ensured.

With reference to the example in figure 2, in the case of a small-sized boat 200, the plurality of distance sensors 103 preferably comprises four distance sensors: a first distance sensor S1 arranged afore, in the center of the boat 200; the sensor distance sensor S2 arranged astern, in the center of the boat 200; a third distance sensor S3 arranged on the starboard side of the boat 200, at the middle line; a fourth distance sensor S4 arranged on the left side of the boat 200, at the middle line.

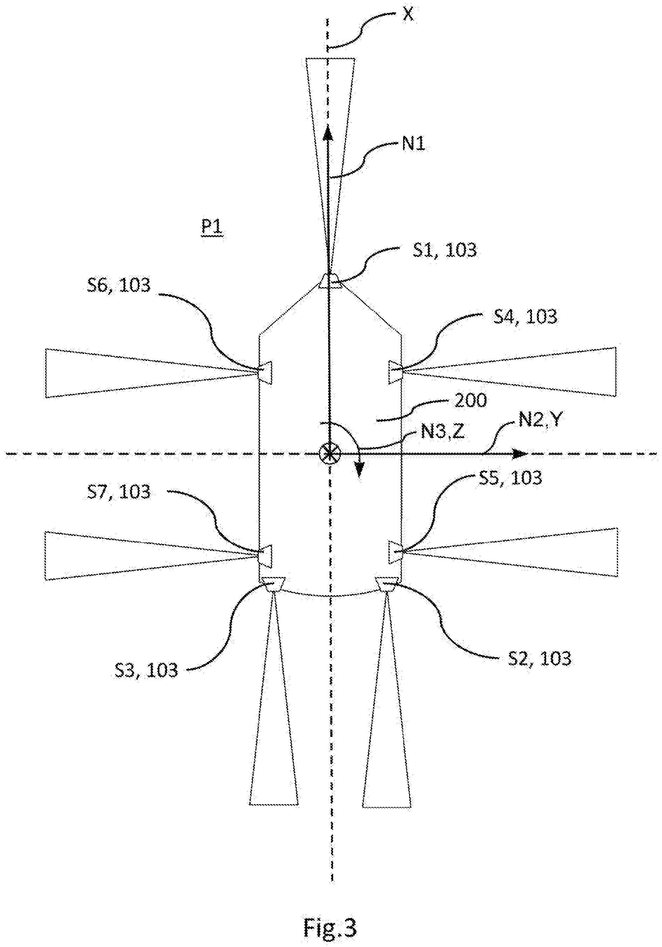

With reference to the example in figure 3, in the case of a largesized boat 200, the plurality of distance sensors 103 preferably comprises seven distance sensors: a first distance sensor S1 arranged afore, on the center of the boat 200; a second distance sensor S2 and a third distance sensor S3 located astern, respectively on the starboard and left side of the boat 200; a fourth distance sensor S4 and a fifth distance sensor S5 arranged on the right side of the boat 200, afore and astern respectively; a sixth distance sensor S6 and a seventh distance sensor S7 arranged on the left side of the boat, afore and astern respectively.

According to an embodiment, each distance sensor of the plurality of distance sensors 103 is removable and provided with an appropriate mechanical system for coupling outside the hull and adjusting the height / tilt to ensure the adequate covering of the environment surrounding the boat 200.

According to another embodiment, alternative to the one above, each distance sensor of the plurality of distance sensors 103 is fixed and integrated in the exterior plating of the hull of the boat 200 at a set height with respect to the water level to avoid interferences with the wave surface and guarantee a sufficient margin for the floating variations of the boat 200.

Turning back in general to the system 100 of the embodiment in figure 1, the system 100 further comprises a plurality of actuators 104, each of which is operatively connected to the data processing unit 101.

An actuator of said plurality of actuators 104 is configured to apply one or more forces, the force being applied in a force application point corresponding to a position of a sensor S1 of said plurality of sensors 103, the force being applied along a force application direction corresponding to the direction D1 inclined with respect to the reference axis N1 (or N2) of the boat 200, indicated also as axis "X" (or as axis "Y") of a set angle, in order to move the boat 200.

Examples of actuators are an in-line stern thruster, a rudder, a maneuver thruster, and so on.

With regards to the configuration and the distribution of the plurality of actuators 104 on the boat 200, the system 100 is compatible with any configuration of actuators, i.e. without distinction of number, type and collocation, providing they can satisfy the same requirements posed for the dynamic positioning systems, i.e. providing the configuration of the actuators is capable of independently generating a given longitudinal force, a given transverse force and a given moment with respect to a vertical reference axis (not shown in the figures) passing through the center of the boat and orthogonal with respect to the maneuver plane P1.

In this manner, the system 100 can advantageously control the longitudinal motion, the transverse motion and the direction of the bow of the boat 200 in independent manner.

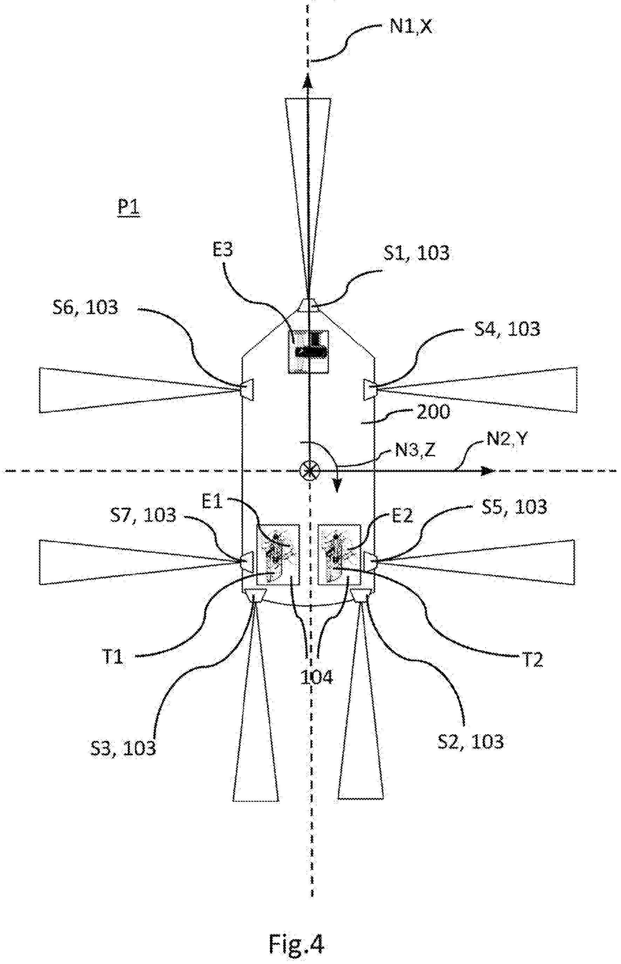

With reference to the example in figure 4, typical for many large-size boats, the plurality of actuators 104 of the system 100 is distributed according to a set configuration which comprises: a first in-line stern thruster E1 and a second in-line stern thruster E2 arranged, respectively, on the left and starboard side of the boat 200, for the main propulsion forwards and backwards; a first rudder T1 and a second rudder T2, arranged respectively behind the first stern thruster E1 and the second stern thruster E2, for the main control of the bow of the boat 200; a bow thruster E3, for supporting the control of the bow of the boat 200 in case of slow advancement speeds.

According to a further embodiment, shown in figure 1, the system 100 further comprises a direction reference sensor 105 of the boat 200 with respect to the first reference axis N1, the second reference axis N2 (belonging to the maneuver plane P1) and to the third reference axis N3 (orthogonal to the maneuver plane P1), operatively connected to the data processing unit 101.

An example of a three-axis direction reference sensor 105 is a triaxial gyroscope sensor.

It is worth noting that the at least one direction reference sensor 105 of the boat 200 is configured to detect, along the first reference axis N1, the angular rolling motion, along the second reference axis N2, the angular pitch motion, along the third reference axis N3, the angular motion of the bow.

According to a further embodiment shown in figure 1, the system 100 further comprises a position reference sensor 106 of the boat 200 on the maneuver plane P1, operatively connected to the data processing unit 101.

An example of position reference sensor 106 on the maneuver plane P1 is a DGPS type sensor (standing for *"Differential Global Positioning System"*) for measuring the position of the boat on a XY plane (e.g. the maneuver plane P1) with respect to land.

According to a further embodiment shown in figure 1, the system 100 further comprises at least one environmental reference anemometric type sensor 107, operatively connected to the data processing unit 101.

An example of environment reference sensor 107 is a 2D ultrasound sensor for detecting speed and direction of the wind striking the boat 200, with respect to the maneuver plane P1 and to the first reference axis N1 of the boat 200.

Furthermore, according to a further embodiment, shown in figure 1, the system 100 comprises a video unit 108, operatively connected to the data processing unit 101, configured to acquire a 360° view of the environment surrounding the boat 200.

Examples of video units 108 are one or more cameras mounted on one or more masts of the boat 200 or an aerial drone provided with orientable camera.

Turning back in general to the system 100 in figure 1, it is worth noting that the data processing unit 101 is configured to carry out the steps of the method for automatically controlling the mooring maneuver of a boat 200 with respect to the object 201, which will be described below.

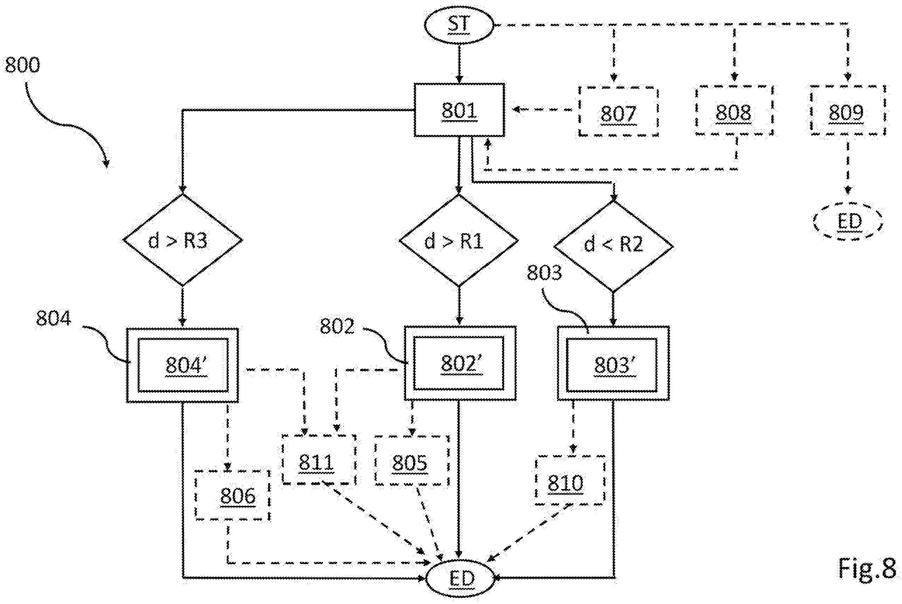

A method 800, as indicated in figure 8, for automatically controlling the mooring maneuver of a boat 200 with respect to an object 201, hereinafter also automatic control method or simply method, will now be described with reference now to figures 5, 6, 7 and 8.

As previously mentioned, the object 201 develops parallel to a first reference axis A1 of a maneuver plane P1, e.g. the water plane. The boat 200 is provided with at least one first distance sensor S1 (of the plurality of distance sensors 103) configured to detect the relative distance d between the first sensor S1 and the object 201 along a direction D1 inclined with respect to a reference axis (N1 or N2, as explained above) of the boat 200 by a set angle.

The method 800 comprises a symbolic step of starting ST (figure 8).

The method 800 further comprises a step of detecting 801, by the first sensor S1, the relative distance d between the first sensor S1 and the object 201 along the direction D1 inclined with respect to the reference axis of the boat 200 by a set angle (figures 5, 6, 7 and 8).

With reference now in particular to figures 5 and 8, if the detected distance d is greater than a set first reference value R1 (figure 8), the method 800 comprises a step of applying 802 (figure 8) to the boat 200, by one or more actuators of the plurality of actuators 104 controlled by the data processing unit 101, a first force F1 having a first direction v1 from the boat 200 to the object 201 at the position of the first sensor S1 along the direction D1 inclined with respect to the reference axis (N1 or N2) of the boat 200 by a set angle (figure 5).

It is worth noting that the set first reference value R1 is preferably defined in advance by the operator according to the mooring maneuver and the safety margins set for the type of boat 200.

Examples of the set first reference value R1 are comprised in the 1 meter - 5 meters range.

The step of applying 802 comprises a step of modulating 802' the intensity of the first force F1 as a function of the rate of variation of the relative distance d between the first sensor S1 and the object 201 so as to guarantee that the boat 200 can move along direction D1, inclined with respect to the reference axis (N1 or N2) of the boat 200 by a set angle, with a speed having a constant value equal to a set reference value VREF.

It is worth noting that the set reference value VREF is preferably set in advance by the operator according to the mooring maneuver and the safety margins set for the type of boat 200.

Examples of the set reference value VREF are comprised in the 0 meters per second - 1 meter per second range.

In other words, the step of applying 802 the first force F1 described above makes it possible to simulate on the boat 200 the action of a winch rope, meaning with this expression a component capable of applying a traction force (the first force F1), applied at the position of the distance sensor S1, directed along direction D1 (along which the distance sensor S1 transmits the respective measuring signal), modulated in intensity with respect to the variation rate of the relative distance detected between distance sensor S1 and the external object 201 identified by it, so as to keep the speed of the boat 200 at a constant value equal to a set reference value VREF, along direction D1, precisely as under the bias of a winch rope.

According to an embodiment, the step of applying 802 the first force F1 (simulating a winch rope) is achieved by simulating a virtual hydrodynamic system which can be represented by the following formula:

$$F1 = -K_D^W \cdot \left(\dot{d} - VREF\right) - K_I^W \cdot \int_{t-T}^{t}\left(\dot{d} - VREF\right)dt \qquad (1)$$

wherein:

F1: first force;
d: variation rate of the relative distance d between the first distance sensor S1 and the object 201 along the direction D1 inclined with respect to the reference axis (N1 or N2) of the boat 200 by a set angle;
VREF: set reference value of the speed of the boat 200;
$K_D^W$: derivative constant ("D") of the gain ("K") of the feedback law of the winch rope element (indicated with the symbol "W");
$K_I^W$: integrative constant ("I") of the gain ("K") of the feedback law of the winch rope element (indicated with the symbol "W");
T: time constant, set by the control law according to the dynamic features of the boat 200, for applying the integrative gain $K_I^W$ ("W").
It is worth noting that the step of applying 802 the first force F1 is activated/deactivated automatically in the moment in which the relative distance d detected by the first sensor S1 is respectively higher/lower than the first reference value R1.

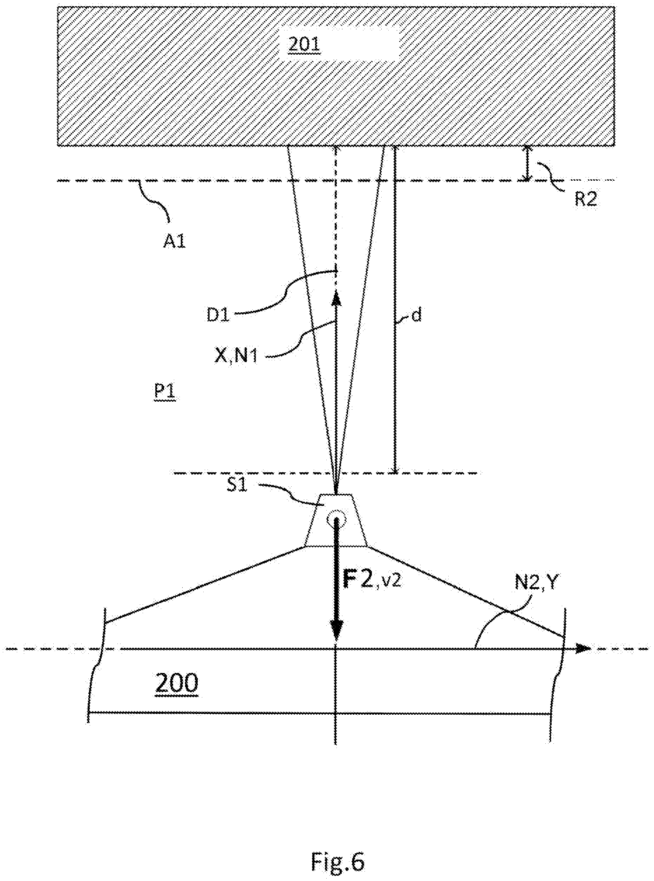

With reference now in particular to figures 6 and 8, if the distance d detected by the first sensor S1 is lower than a set second reference value R2 (figure 8), the method 800 further comprises a step of applying 803 to the boat 200, by one or more actuators of the plurality of actuators 104 controlled by the data processing unit 101, a second force F2 having a second direction v2 of the object 201 towards the boat 200 at the position of the first sensor S1 along the direction D1 inclined with respect to the reference axis (N1 or N2) by a set angle (figure 6).

The step of applying 803 the second force F2 comprises a step of modulating 803' the intensity of the second force F2 so that it increases as the relative distance d between the first sensor S1 and the object 201 decreases.

In other words, the step of applying 803 the second force F2 described above makes it possible to simulate on the boat 200 the action of a mooring fender, meaning with this expression a component capable of applying a repulsive force (the second force F2), applied at the first distance sensor S1, directed along direction D1 (along which the distance sensor S1 transmits the respective measuring signal), modulated in intensity so that it increases as the relative distance d between the first distance sensor S1 and the external object 201 identified by it decreases.

According to an embodiment, the step of applying 803 the second force F2 (simulating the action of a mooring fender) is made by simulating a virtual mechanical system comprising an elastic element (spring) and a damper which can be represented by the following formula:

$$F2 = -K_D^F \cdot \dot{d} - K_P^F \cdot (d - R2) \qquad (2)$$

wherein:

F2: second force;
d: relative distance between the first distance sensor S1 and the object 201 along the direction D1 inclined with respect to the reference axis (N1 or N2) of the boat 200 by a set angle;
d: variation rate of the relative distance between the first distance sensor S1 and the object 201 along the direction D1 inclined with respect to the reference axis (N1 or N2) of the boat 200 by a set angle;
$K_D^F$: derivative constant ("D") of the gain ("K") of the feedback law of the mooring fender element (indicated with the symbol "F");

$K_P^F$ : proportional constant ("P") of the gain ("K") of the feedback law of the mooring fender element ("F");
R2: set second reference value.

It is worth noting that the step of applying 803 the second force F2 is activated/deactivated automatically when the relative distance d is respectively higher/lower than the second reference value R2.

In an embodiment, the set reference value R2 is equal to the first set reference value R1.

In a further embodiment, alternative to the previous one, the set second reference value R2 is different from the first set reference value R1.

In this case, examples of the set second reference value R2 are comprised in the 1 meter - 5 meters range.

It is worth noting that the step of applying 803 the second force F2 is defined automatically when the variation rate d of the relative distance d between the first distance sensor S1 and the object 201 corresponds to an increase.

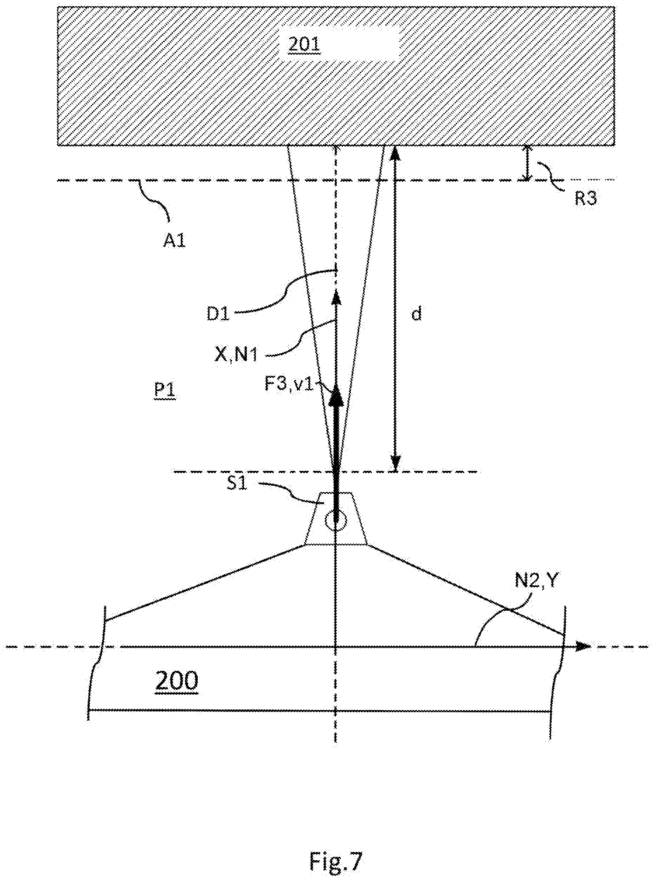

With reference now in particular to figures 7 and 8, if the distance d detected by the first sensor S1 is higher than a set third reference value R3, the method 800 further comprises a step of applying 804 to the boat 200, by one or more actuators of the plurality of actuators 104 controlled by the data processing unit 101, a third force F3 having a first direction v1 of the boat 200 towards the object 201 at the position of the first sensor S1 along the direction D1 inclined with respect to the reference axis (N1 or N2) by a set angle (figure 7).

The step of applying 804 the third force F3 comprises a step of modulating 804' the intensity of the third force F3 so that it increases as the relative distance d between the first sensor S1 and the object 201 increases.

According to an embodiment, the step of applying 804 the third force F3 (action of a mooring fender) is made by simulating a virtual system comprising an elastic element (spring) and a damper, which can be represented by the following formula:

$$F3 = -K_D^S \cdot \dot{d} - K_P^S \cdot (d - R3)$$

wherein:

F3: third force;
d: relative distance between the first sensor S1 and the object along the direction D1 inclined with respect to the reference axis (N1 or N2) by a set angle;
d: variation rate of the relative distance d between the first distance sensor S1 and the object 201 along the direction D1 inclined with respect to the reference axis (N1 or N2) by a set angle;
$K_D^S$ : derivative constant ("D") of the gain ("K") of the feedback law of the mooring rope element (also named "Spring" and indicated with the symbol "S").
$K_P^S$ : proportional constant ("P") of the gain ("K") of the feedback law of the mooring rope element ("S");
R3: set third reference value.

It is worth noting that that the step of applying 804 the third force F3 is automatically activated/deactivated if the detected relative distance d is respectively higher/lower than the set third reference value R3 preset by the operator according to the mooring maneuver and the safety margins set for the type of boat 200.

It is worth noting that the set third reference value R3 is preferably set in advance by the operator according to the mooring maneuver and the safety margins set for the type of boat 200.

In an embodiment, the set reference value R3 is equal to the third set reference value R2.

In a further embodiment, alternative to the previous one, the set third reference value R3 is different from the second set reference value R2.

In this case, examples of the set second reference value R3 are comprised in the 1 meter - 5 meters range.

According to an embodiment, shown by dashed lines in figure 8, if the step of applying 802 the first force F1 is being carried out, the method 800 further comprises a step of interrupting 805, by one or more actuators of the plurality of actuators 104 controlled by the data processing unit 101, the step of applying 804 the third force F3.

This is due to the fact that the step of applying 804 the third force F3 (simulating a mooring rope) and the step of applying 802 the first force F1 (simulating a winch rope) are mutually exclusive for the same distance sensor S1.

According to a further embodiment, shown by dashed lines in figure 8, either alternatively or in combination with those above, if the step of applying 804 the third force F3 is being carried out, the method further comprises a step of interrupting 806, by one or more actuators of the plurality of actuators 104 controlled by the data processing unit 101, the step of applying 802 the first force F1.

This is due to the fact that the step of applying 804 the third force F3 (simulating a mooring rope) and the step of applying 802 the first force F1 are mutually exclusive for the distance sensor S1 itself.

According to an embodiment, the step of applying 803 the second force F2 is carried out, by one or more actuators controlled by the data processing unit, at the same time as the step of applying 802 the first force F1.

This is due to the fact that the step of applying 803 the second force F2 (simulating a mooring fender) may be shared by the same distance sensor S1 with the step of applying 802 the first force F1 (simulating a winch rope).

According to a further embodiment, the step of applying 803 the second force F2 is carried out, by one or more actuators of the plurality of actuators 104 controlled by the data processing unit 101, at the same time as the step of applying 804 the third force F3.

This is due to the fact that the step of applying 803 the second force F2 (simulating a mooring fender) may be shared by the same distance sensor S1 with the step of applying 804 the third force F3 (simulating a mooring rope).

According to an embodiment, in combination with any of those described above, shown in figure 8 by a dashed line, the method 800 comprises a step of setting 807, by an operator by means of the use of a control panel 102 operatively connected to the data processing unit 101, the step of applying 802 the first force F1, the step of applying 803 the second force F2 and the step of applying 804 the third force F3 before starting the mooring maneuver of the boat 200.

Indeed, according to the type of mooring maneuver chosen for the boat 200 and of the configuration of the plurality of actuators 104 available onboard, the step of applying 802 the first force F1 (simulating a winch rope), the step of applying 803 the second force F3 (simulating a mooring fender) and the step of applying the third force F3 (simulating a winch rope) may be assigned by the operator to each distance sensor of the plurality of distance sensors 103 distributed on the boat 200, before starting the mooring maneuver of the boat 200, either alternatively or in combination.

In greater detail, it is worth noting that the automatic performance of the mooring maneuver of the boat 200 with respect to an obstacle 201 may be started by the operator by means of the control panel 102 of the system 100, once the boat 200 has been stabilized in the arrangement (bow) and area (position) defined by the operator him or herself according to the envisaged mooring scenario.

It is worth noting that that such stabilization is achieved by means of the *"hold heading"/ "hold position"* functions implemented by the system 100 by the data processing unit 101.

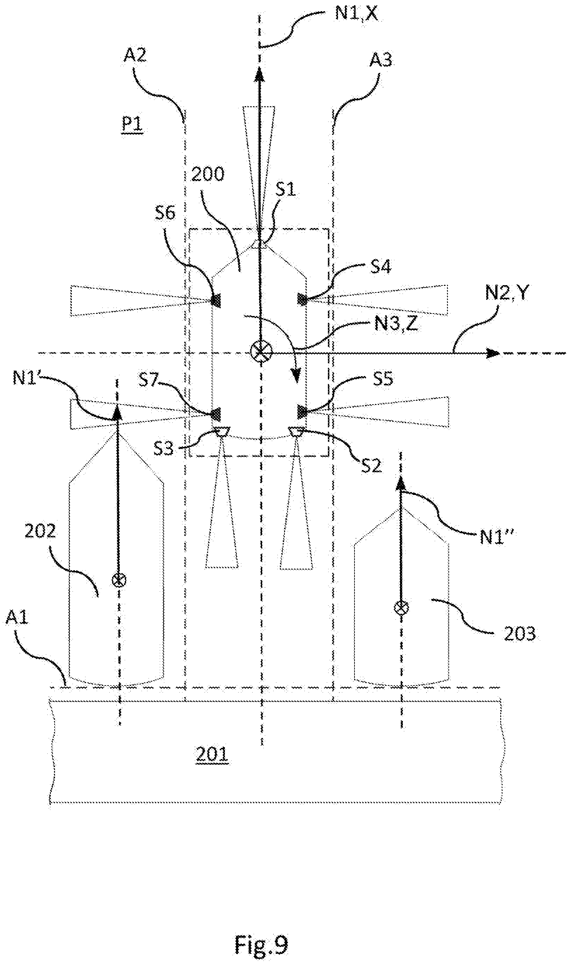

With reference for example to figure 9, for a stern mooring maneuver, by means of the "hold heading" / "hold position" functions, the boat 200 is stabilized in the arrangement so that the first reference axis N1 of the boat 200 is preferably orthogonal to the first reference axis A1 of the obstacle 201 representative of the mooring quay and in the position so as to be arranged at the end of the mooring maneuver, between a second boat 202 and a third boat 203 already moored with the respective longitudinal axis (N1'and N1") orthogonal to the first reference axis A1 of the object 201.

It is worth noting that the distance sensor arranged astern, i.e. the second distance sensor S2 and the third distance sensor S3, may be considered equal to the distance sensor S1 described with reference to the figures 5, 6 and 7. In this case, the first reference axis A1 is always the one along which the object 201, i.e. the mooring quay, develops.

With regards to each distance sensor arranged astarboard of the boat 200, i.e. the fourth distance sensor S4 and the fifth distance sensor S5, may be always considered equal to the distance sensor S1 described with reference to figures 5, 6 and 7, with the difference that the first reference axis is that one along which the left side of the third boat 203, indicated by reference A3, develops.

With regards to each distance sensor arranged to the left of the boat 200, i.e. the sixth distance sensor S6 and the seventh distance sensor S7, may be always considered equal to the distance sensor S1 described with reference to figures 5, 6 and 7, with the difference that the first reference axis is that one which develops along the starboard side of the second boat 202, indicated by reference A2.

As previously mentioned, once the arrangement and position of the boat 200 have been stabilized, the operator sets, for each distance sensor of the plurality of distance sensors 103 with which the boat 200 is provided, one of the steps of applying 802, 803, 804, respectively the first force F1, the second force F2 and the third force F3, either alternatively or in combination.

In the example in figure 9, in the case of a stern longitudinal mooring maneuver to a quay for a boat 200 having a configuration of the plurality of actuators 104 as shown in the embodiment shown in figure 4, a possible initial setting by the operator by means of the control panel 102, may be the following:

- the fourth distance sensor S4, the fifth distance sensor S5, the sixth distance sensor S6, the seventh distance sensor S7 are initially set to simulate the function of a mooring fender. Once the simulation of the mooring fender is activated by the aforesaid distance sensors (according to the exceeding of the relative distance d detected by each distance sensor of the set reference value), such distance sensors S4, S5, S6 and S7 are automatically activated also for the possibility of simulating the function of a mooring rope so as to stabilize the boat 200 in the set mooring slot;
- the second distance sensor S2 and the third distance sensor S3 are initially set to simulate the function of a winch rope and the function of a mooring fender. Once the simulation of the function of a mooring fender, by the aforesaid distance sensors (S2 and S3) is activated and/or of the simulation of the function of a winch rope is deactivated (according to the comparison of the relative distance d detected by each distance sensor with respect to the set reference value), such distance sensors S2 and S3 are automatically activated also for the possibility of simulating the function of a mooring rope so as to stabilize the boat in the set mooring slot.

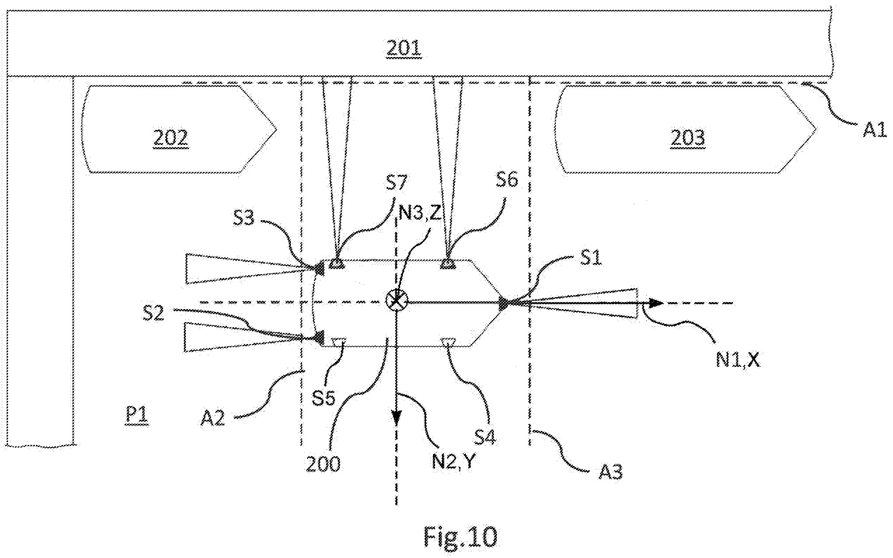

In the example in figure 10, in the case of a left side mooring maneuver to a quay for a boat 200 having a configuration of the plurality of actuators 104 as in the embodiment shown in figure 4, a possible initial setting by the operator by means of the control panel 102, may be the following:

- the first distance sensor S1, the second distance sensor S2 and the third distance sensor S3 are initially set to simulate the function of a mooring fender and the function of a mooring rope. Indeed, once the simulation of the mooring fender is activated by the aforesaid distance sensors (according to the comparison of the relative distance d detected by each distance sensor of the set reference value), such distance sensors S1, S2 and S3 are automatically activated also for the possibility of simulating the function of a mooring rope so as to stabilize the boat 200 in the preassigned mooring slot;
- the sixth distance sensor S6 and the seventh distance sensor S7 are initially set to simulate the function of a winch rope and the function of a mooring fender. Once the simulation of the function of a mooring fender, by the aforesaid distance sensors (S6 and S7) is activated and/or of the simulation of the function of a winch rope is deactivated (according to the comparison of the relative distance d detected by each distance sensor with respect to the set reference value), such distance sensors are automatically activated also for the possibility of simulating the function of a mooring rope, so as to stabilize the boat in the preassigned mooring slot.

According to an embodiment, either alternatively or in combination with any of those described above, shown by dashed lines in figure 8, the method 800 comprises a further step of setting 808, by an operator by means of the use of a control panel 102 operatively connected to the data processing unit 101, the step of applying 802 the first force F1, the step of applying 803 the second force F2 and the step of applying 804 the third force F3 at any time during the mooring maneuver of the boat 200.

Indeed, according to the chosen type of mooring maneuver and of the configuration of the plurality of actuators 104 available aboard the boat, the step of applying 802 the first force F1 (simulating a winch rope), the step of applying 803 the second force F2 (simulating a mooring fender) and the step of applying 804 the third force F3 (simulating a winch rope) may be assigned by the operator to each distance sensor of the plurality of distance sensors 103 distributed on the boat 200, at any time during the mooring maneuver of the boat 200.

According to an embodiment, either alternatively or in combination with any of those described above, shown by dashed lines in figure 8, the method 800 comprises a further step of interrupting 809, by an operator through the use of a control panel 102 operatively connected to the data processing unit 101, the step of applying 802 the first force F1, the step of applying 803 the second force F2 and the step of applying 804 the third force F3 during the mooring maneuver of the boat 200.

It is worth noting that that in an embodiment, the step of interrupting 809 is preferably performed by the operator by pressing a STOP button present on the control panel 102.

This advantageously allows the operator to interrupt the automatic mooring maneuver and to immediately resume manual controls of the single actuators of the boat 200.

According to an embodiment, either alternatively or in combination with any of those described above, shown by dashed lines in figure 8, the method 800 comprises a further step of temporarily disabling 810, by an operator through the use of a control panel 102 operatively connected to the data processing unit 101, the step of applying 803 the second force F2, during the mooring maneuver of the boat 200 to allow a manual control of the boat 200.

Indeed, the operator by appropriately acting on the control panel 102, may intervene at any moment on the automatic execution of the mooring maneuver, by temporarily disabling the simulations of the function of a previously activated mooring fender and immediately take manual control of the bow of the boat 200.

In an embodiment, the step of disabling 810 is achieved by the operator by acting on the knob of the joystick included in the control panel 102.

It is worth noting that the previously disabled simulations of the function of a mooring fender will be automatically re-enabled when the knob of the joystick is released.

According to an embodiment, either alternatively or in combination with any of those described above, shown by dashed lines in figure 8, the method 800 comprises a further step of temporarily disabling 811, by an operator by means of the use of a control panel 102 operatively connected to the data processing unit 101, the step of applying 802 the first force F1 and the step of applying 804 the third force F3 during the mooring maneuver of the boat 200 to allow a manual control of the boat 200.

Indeed, the operator, by appropriately acting on the control panel 102, may intervene at any moment on the automatic execution of the mooring maneuver, by temporarily disabling the simulations of the function of a winch rope and of the function of a mooring rope already activated and to immediately take manual control of the longitudinal/transverse movements of the boat 200, acting preferably on the lever of the joystick included in the control panel 102.

It is worth noting that by returning the lever of the joystick to zero, the simulations of the function of a winch rope and of the function of a mooring rope, previously disabled, will be re-enabled automatically.

It is worth noting that according to an embodiment, during the entire mooring maneuver, also in the case in which the simulations of the function of a winch rope, of the function of a mooring rope and of the function of a mooring fender are not activated, the data detected by the distance sensors will be in all cases continuously processed, by the data processing unit 101, so as to provide indications/alarms to the operator synchronized with an optical reference of the video unit 108, described above.

According to a further embodiment, not shown in the figure 8, the method 800 comprises the steps of:

- detecting, by an anemometric type sensor 107 operatively connected to the data processing unit 101, speed and directionof the wind on the maneuver plane P1 with respect to the first reference axis N1;
- determining, by the data processing unit 101, a triad of aerodynamic forces and moment on the maneuver plane P1 based on the speed and direction of the wind detected by the anemometric type sensor 107;
- applying, by one or more actuators of the plurality of actuators 104 controlled by the data processing unit 101, the triad of aerodynamic forces and moment at the first sensor S1 (figures 5, 6, 7) in addition, by means of a feedforward action, to one or more of the first force F1, the second force F2 and the third force F3.

This advantageously makes it possible to automatically compensate for the wind disturbance action during the automatic/semi-automatic mooring maneuver according to the data detected by the anemometric type sensor 107 in terms of speed and direction of the wind striking on the boat 200.

As mentioned above, the relative speed and direction of the wind, measured in real time by the anemometric type sensor 107, are transformed, by the data processing unit 101, into a triad of forces and moment on the maneuver plane P1 by means of an appropriate whole of aerodynamic coefficients, according to the formula shown below:

$$F_X = \frac{1}{2} \rho_A A_F C_X(\gamma_R) V_R^2$$

$$F_Y = \frac{1}{2} \rho_A A_L C_Y(\gamma_R) V_R^2$$

$$M_Z = \frac{1}{2} \rho_A A_L L C_N(\gamma_R) V_R^2$$

wherein:

$F_X$: force applied by the wind along the first reference axis N1 (longitudinal axis) of the boat 200;
$F_Y$: force applied by the wind along the second reference axis N2 (transverse axis) of the boat 200;
$M_Z$: moment applied by the wind with respect to the third reference axis N3 (vertical axis) passing through the center of the boat 200;
$C_X$: aerodynamic coefficient associated with $F_X$;
$C_Y$: aerodynamic coefficient associated with $F_Y$;
$C_N$: aerodynamic coefficient associated with $M_Z$;
$\rho_A$: air density;
$A_F$: front area of the boat 200 emerged from the water;
$A_L$: longitudinal area of the boat 200 emerged from the water;
$L$: length of the boat 200;
$\gamma_R$: incidence wind direction with respect to the bow of the boat 200;
$V_R$: relative wind speed with respect to the boat 200 (coinciding with the absolute speed in the case of stationary boat 200).

Such aerodynamic forces are thus added, by means of the feed-forward action, in independent manner before being allocated on the different actuators of the boat 200.

According to a further embodiment, the method 800 further comprises a step of faithfully reproducing the mooring maneuver of the boat 200, by the processing unit 101 on the basis of a dynamic simulation method, taking the effect of the wind disturbance into account.

According to a further embodiment, the method 800 further comprises, in an off-line operation mode, a step of simulating, by the operator by means of the dynamic simulation model and the physical controls of the control panel 102, the mooring maneuver in the actual environmental conditions.

In the off-line operating mode, the data processing unit 101 of the system 100 is configured to communicate with an electronic processor which hosts the dynamic simulation model.

In this mode, the controls imparted by the operator by means of the control panel 102, are provided to and supplied by the dynamic simulation model and not by the on-board components (sensors and actuators) of the boat 200. The results of the simulation are advantageously viewed on a digital map to support the operator in setting the mooring maneuver and evaluating the risk level of the maneuver itself.

According to a further embodiment, not shown in the figures, the method 800 comprises a step of calculating, by the data processing unit 101, a triad of resultant global forces and moment on the boat 200 of the resultant of the action of each of said first force F1, second force F2 and third force F3, for a plurality of distance sensors entirely similar to the first sensor S1.

Such global forces on the maneuver plane P1 and moment can be represented by the following formula:

$$F_X = \sum_{i=1}^{N} X_i^{FSW}$$

$$F_Y = \sum_{i=1}^{N} Y_i^{FSW}$$

$$M_Z = \sum_{i=1}^{N} x_i \cdot Y_i^{FSW} - y_i \cdot X_i^{FSW}$$

wherein:

$F_X$: resultant of the forces required by the system simulating mooring fender ("F"), mooring ropes ("S") and winch ropes ("W") along the first reference axis N1 (longitudinal axis) of the boat 200;
$F_Y$: resultant of the forces required by the system simulating mooring fender ("F"), mooring ropes ("S") and winch ropes ("W") along the second reference axis N2 (transverse axis) of the boat 200;
$M_Z$: resultant moment of the forces required by the system simulating mooring fender ("F"), mooring ropes ("S") and winch ropes ("W") with respect to the third reference axis N3 (vertical) passing through the center of the boat 200;
$X_i^{FSW}$: force required by the i-th distance sensor along the first reference axis N1 (longitudinal axis) of the boat 200;
$Y_i^{FSW}$: force required by the i-th distance sensor along the second reference axis N2 (transverse axis) of the boat 200;
$x_i$: longitudinal position of the i-th distance sensor with respect to the center of the boat 200 (positive forwards);
$y_i$: transverse position of the i-th distance sensor with respect to the longitudinal axis of the boat (positive astarboard);
N: total number of distance sensors installed on the boat 200.

According to an embodiment, the method 800 further comprises a step of automatically applying, by the data processing unit 101, a digital filter of the low-pass filter or equivalent type to the global force triad and moment so as to remove the high-frequency disturbances possibly present in the feedback signal of the distance sensors following the oscillatory motion of the boat 200.

According to a further embodiment, the method 800 further comprises a step of allocating, by the data processing unit 101, downstream of the "pass-low" filter, the global forces on the actuators of the plurality of actuators 104 currently available on the basis of a force allocation logic.

According to a further embodiment, in combination with the above, the method 800 comprises a step of providing, by the data processing unit 101, controls to the single actuators so as to provide the force required by the force allocation logic on the basis of a thrust allocation logic.

The aforesaid force allocation and thrust allocation logics used to automatically distribute on the single actuators the forces which simulate the function of a mooring rope, as a function of a winch rope and the function of a mooring fender, are also used by the data processing unit 101 for the integrated control of the single actuators according to the manual controls applied by the operator by means of the actuation on the knob and on the lever of the joystick included in the control panel 102.

According to a further embodiment, either alternatively or in combination with those described above, one or more distance sensors of the plurality of distance sensors 103 may be used for simulating the function of an actuator.

For example, with reference to the embodiment shown in figure 10, in the case of a boat 200 provided with two adjustable stern propellers situated respectively starboard and left, a starboard stern distance sensor (fifth distance sensor S5) and starboard longitudinal stern distance sensor (third distance sensor S3) may be used for simulating the function of a starboard stern propeller, while a left stern side distance sensor (sixth distance sensor S6) and a left stern longitudinal distance sensor (second distance sensor S2) may be used to simulate a left stern propeller. In this case, the force allocation logic will require a transverse force to the stern propeller on the basis of the data provided by the stern sensor and a longitudinal force on the basis of the data provided by the stern longitudinal sensor; the thrust allocation logic will then control the stern propeller so as to provide the required forces, e.g. by appropriately controlling the orientation and the revolution of the propeller.

With reference again to figures 5, 6 and 7, it is worth noting that the distance sensors are preferably installed on the boat so that the distance D, along which the relative distance d is detected, by the aforesaid distance operators between each distance sensor and the object 201, is perpendicular respectively to the first reference axis N1 of the boat for the side distance sensors and to the second reference axis N2 for the longitudinal distance sensors.

In particular, again with reference to the aforesaid figures, the set inclination angle of the direction D, along which the relative distance d between the first sensor S1 and the object 201 is detected, with respect to the first reference axis N1 of the boat 200 is preferably equal to 0° (and thus preferentially equal to 90° if referred to the second reference axis N2 of the boat 200), i.e. the aforesaid direction D coincides with the first reference axis N1 of the boat 200.

According to a further embodiment, it is further worth noting that the first reference value R1 is equal to the second reference value R2.

According to a further embodiment, alternatively to the previous one, the first reference value R1 is instead different from the second reference value R2.

According to a further embodiment, it is further worth noting that the second reference value R2 is equal to the third reference value R3.

According to a further embodiment, alternatively to the previous one, it is further worth noting that the second reference value R2 is equal to the third reference value R3.

With reference again to figure 8, the method 800 comprises a symbolic step of ending ED.

It is worth noting that the object of the present invention is fully achieved.

Indeed, as described above, the method of the invention comprises specific functions for performing in completely autonomous and safe manner the mooring maneuver which simulate, by means of the coordinated action of the various actuators of the boat, the same physical effect of a system of ropes and fenders applied at the distance sensors available onboard.

Furthermore, the approaching maneuvers to a mooring quay is carried out excellently also in presence of unfavorable wind conditions, because the operator's intervention is made nearly unnecessary and the use of ropes (winch and mooring) and of physical fenders until the end of the maneuver is actually replaced.

The method of the invention is based on the possibility of simulating, by means of the coordinated management of the various actuators present aboard by an automatic feedback control on the aforesaid distance sensors, the same effect on the motion of the boat that the physical systems would have.

In particular, the method of the invention advantageously makes it possible to:

- carry out a generic mooring maneuver, such as for example getting around an obstacle by turning the bow and/or crabbing, in entirely automatic manner, i.e. without logics wired in the control system which require the boat to operate a given sequence of predetermined movements;
- manage a generic combination of actuators, distance sensors, quay and surrounding objects;
- manage a degree of maneuver flexibility and safety equivalent to the use of a system of winches, ropes, fenders and boathooks by a coordinated team operating on the quay and on the boat, by simulating the same effects as the physical system by means of the coordinated action of the actuators.

Furthermore, the method of the invention makes it possible to directly compensate for the environmental disturbances during the automatic mooring maneuver by means of so-called feed-forward action, i.e. by algebraically adding to the deviation error feedback concerning the position of the boat with respect to the reference values the action of the wind forces, estimated in real time on the basis of a dynamic model of the boat and of the measurements of the anemometric sensor preferentially included in the system.

Furthermore, the method of the invention further makes it possible to remove from the feedback signal the periodical fluctuations due to the possible residual swell in the harbor area in order not to move the actuators and to deteriorate the operation of the automatic control system unnecessarily.

Finally, the method of the invention preferentially also includes an off-line operating method which allows the operator to simulate, by means of a dynamic model of the boat, the desired mooring maneuver before is actual performed to validate the start of the automatic step and to verify the risk margin of the maneuver itself.

**Claims**

1. A method (800) for automatically controlling the mooring maneuver of a boat (200) with respect to an object (201), said boat (200) being provided with at least one distance sensor (S1-S7 ) configured to detect the relative distance (d) between a first distance sensor (S1) and the object (201) along a direction (D1) inclined with respect to a reference axis (N1, N2) of the boat (200) by a set angle, the method (800) comprising the steps of:

   - detecting (801), by the first distance sensor (S1), the relative distance (d) between the first distance sensor (S1) and the object (201) along the direction (D1) inclined with respect to the reference axis (N1, N2) of the boat (200) by a set angle;
   - if the detected distance (d) is greater than a set first reference value (R1):

      - applying (802) to the boat (200), by one or more actuators of a plurality of actuators (104; E1-E3) controlled by a data processing unit (101), a first force (F1) having a first direction (v1) from the boat (200) to the object (201) at the position of the first distance sensor (S1) along the direction (D1) inclined with respect to the reference axis (A1) of the boat (200) by a set angle, the step of applying (801) comprising a step of modulating (802') the intensity of the first force (F1) as a function of the rate of change of the relative distance (d) between the first distance sensor (S1) and the object (201) so as to ensure that the boat (200) moves along the direction (D1), inclined with respect to the reference axis (N1, N2) of the boat (200) by a set angle, at a speed having a constant value equal to a set reference value (VREF);

      - if the distance (d) detected by the first distance sensor (S1) is smaller than a set second reference value (R2):

      - applying (803) to the boat (200), by one or more actuators of the plurality of actuators (104) controlled by the data processing unit (101), a second force (F2) having a second direction (v2) from the object (201) towards the boat (200) at the position of the first distance sensor (S1) along the direction (D1) inclined with respect to the reference axis (N1, N2) of the boat (200) by a set angle, the step of applying (803) the second force (F2) comprising a step of modulating (803') the intensity of the second force (F2) so that it increases as the relative distance (d) between the first distance sensor (S1) and the object (201) decreases;

      - if the distance (d) detected by the first distance sensor (S1) is greater than a set third reference value (R3):

      - applying (804) to the boat (200), by one or more actuators of the plurality of actuators (104) controlled by the data processing unit (101), a third force (F3) having the first direction (v1) from the boat (200) towards the object (201) at the position of the first distance sensor (S1) along the direction (D1) inclined with respect to the reference axis (N1, N2) of the boat (200) by a set angle, the step of applying (804) the third force (F3) comprising a step of modulating (804') the intensity of the third force (F3) so that it increases as the distance (d) detected between the first distance sensor (S1) and the object (201) increases,

   said method (800) comprising a further step of setting (808), by an operator by means of the use of a control panel (102) operatively connected to the data processing unit (101), the step of applying (802) the first force (F1), the step of applying (803) the second force (F2) and the step of applying (804) the third force (F3) at any instant during the mooring maneuver of the boat (200).

2. A method (800) according to claim 1, if the step of applying (802) the first force (F1) is being carried out, further comprising a step of interrupting (805), by one or more actuators of the plurality of actuators (104) controlled by the data processing unit (101), the step of applying (804) the third force (F3).

3. A method (800) according to any one of the preceding claims, if the step of applying (804) the third force (F3) is being carried out, further comprising a step of interrupting (806), by one or more actuators of the plurality of actuators (104) controlled by the data processing unit (101), the step of applying (802) the first force (F1).

4. A method (800) according to any one of the preceding claims, wherein the step of applying (803) the second force (F2) is carried out, by one or more actuators (104) controlled by the data processing unit (101), at the same time as the step of applying (802) the first force (F1).

5. A method (800) according to any one of the preceding claims from 1 to 3, wherein the step of applying (803) the second force (F2) is carried out, by one or more actuators of the plurality of actuators (104) controlled by the data processing unit (101), at the same time as the step of applying (804) the third force (F3).

6. A method (800) according to any one of the preceding claims, comprising a step of setting (807), by an operator by means of the use of a control panel (102) operatively connected to the data processing unit (101), the step of applying (802) the first force (F1), the step of applying (803) the second force (F2) and the step of applying (804) the third force (F3) before starting the mooring maneuver of the boat (200), either alternatively or in combination.

7. A method (800) according to any one of the preceding claims, further comprising a step of interrupting (809), by an operator by means of the use of a control panel (102) operatively connected to the data processing unit (101), the step of applying (802) the first force (F1), the step of applying (803) the second force (F2) and the step of applying (804) the third force (F3) during the mooring maneuver of the boat (200).

8. A method (800) according to any one of the preceding claims, further comprising a step of temporarily disabling (810), by an operator by means of the use of a control panel (102) operatively connected to the data processing unit (101), the step of applying (803) the second force (F2) during the mooring maneuver of the boat (200) to allow a manual control of the boat (200) by the operator.

9. A method (800) according to any one of the preceding claims, comprising a further step of temporarily disabling (811), by an operator by means of the use of a control panel (102) operatively connected to the data processing unit (101), the step of applying (802) the first force (F1) and the step of applying (804) the third force (F3) during the mooring maneuver of the boat (200) to allow a manual control of the boat (200) by the operator.

10. A method (800) according to any one of the preceding claims, wherein the object (201) develops parallel to a respective reference axis (A1) of the maneuver plane (P1), the method (800) further comprising the steps of:

   - detecting, by an anemometric type sensor (107) operatively connected to the data processing unit (101), speed and direction of the wind on the maneuver plane (P1) with respect to the reference axis (N1) of the boat (200);
   - determining, by the data processing unit (101), a triad of aerodynamic forces and moment on the maneuver plane (P1) based on the speed and direction of the wind detected by the anemometric type sensor (107);
   - applying, by one or more actuators of the plurality of actuators (104) controlled by the data processing unit (101), the triad of aerodynamic forces and moment at the first sensor (S1) in addition, by means of a feed-forward action, to one or more of the first force (F1), the second force (F2) and the third force (F3).

11. A method (800) according to any one of the preceding claims, wherein the first set reference value (R1) is equal to the second set reference value (R2).

12. A method (800) according to any one of the preceding claims from 1 to 10, wherein the first set reference value (R1) is different from the second set reference value (R2).

13. A method (800) according to any one of the preceding claims, wherein the second set reference value (R2) is equal to the third set reference value (R2).

14. A method (800) according to any one of the preceding claims from 1 to 12, wherein the second set reference value (R2) is different from the third set reference value (R3).

15. A system (100) for automatically controlling the mooring maneuver of a boat (200) with respect to an object (201), comprising:

- a data processing unit (101);
- a control panel (102) for an operator, operatively connected to the data processing unit (101);
- a plurality of distance sensors (103;S1-S7) each of which is operatively connected to the data processing unit (101), each distance sensor of said plurality of distance sensors (103) being configured to detect a relative distance (d) between the distance sensor (S1-S7) and the object (201) along a direction inclined with respect to a reference axis (N1, N2) of the boat (200) by a set angle; the system being **characterized in that** it further comprises a plurality of actuators (104), each of which operatively connected to the data processing unit (101), each actuator of said plurality of actuators (104) being configured to apply one or more forces, the force being applied at a force application point corresponding to a position of one of the distance sensors (S1-S7), , the force being applied along the direction inclined with respect to the reference axis (N1, N2) of the boat (200) by the set angle, in order to move the boat (200), the data processing unit (101) being configured to execute the steps of the method (800) for automatically controlling the mooring maneuver of the boat (200) with respect to the object (201) according to any one of the preceding claims.

**16.** A system (100) according to claim 15, further comprising:

- at least one reference sensor (105) of the direction of the boat (200) on three axes belonging to the maneuver plane (P1), operatively connected to the data processing unit (101);
- at least one reference sensor (106) of the position of the boat on the maneuver plane (P1), operatively connected to the data processing unit (101);
- at least one anemometric type environmental detection sensor (107) of the boat (200), operatively connected to the data processing unit (101);
- a video unit (108), operatively connected to the data processing unit (101), configured to acquire a 360-degrees view of the environment surrounding the boat (200).

**Patentansprüche**

**1.** Verfahren (800) zum automatischen Steuern des Anlegemanövers eines Bootes (200) in Bezug auf ein Objekt (201), wobei das Boot (200) mit wenigstens einem Abstandssensor (S1-S7) bereitgestellt ist, welcher dazu eingerichtet ist, den relativen Abstand (d) zwischen einem ersten Abstandssensor (S1) und dem Objekt (201) entlang einer Richtung (D1) zu detektieren, welche in Bezug auf eine Referenzachse (N1, N2) des Bootes (200) um einen festgelegten Winkel geneigt ist, wobei das Verfahren (800) die folgenden Schritte umfasst:

- Detektieren (801), durch den ersten Abstandssensor (S1), des relativen Abstandes (d) zwischen dem ersten Abstandssensor (S1) und dem Objekt (201) entlang der Richtung (D1), welche in Bezug auf die Referenzachse (N1, N2) des Bootes (200) um einen festgelegten Winkel geneigt ist;
- wenn der detektierte Abstand (d) größer als ein erster festgelegter Referenzwert (R1) ist:

  - Aufbringen (802) auf das Boot (200), durch einen oder mehrere Aktuatoren einer Mehrzahl von Aktuatoren (104; E1-E3), welche durch eine Datenverarbeitungseinheit (101) gesteuert werden, einer ersten Kraft (F1), welche eine erste Richtung (v1) von dem Boot (200) zu dem Objekt (201) aufweist, an der Position des ersten Abstandssensors (S1) entlang der Richtung (D1), welche in Bezug auf die Referenzachse (A1) des Bootes (200) um einen festgelegten Winkel geneigt ist, wobei der Schritt eines Aufbringens (801) einen Schritt eines Modulierens (802') der Intensität der ersten Kraft (F1) als eine Funktion der Änderungsrate des relativen Abstandes (d) zwischen dem ersten Abstandssensor (S1) und dem Objekt (201) umfasst, um sicherzustellen, dass sich das Boot (200) entlang der Richtung (D1), welche in Bezug auf die Referenzachse (N1, N2) des Bootes (200) um einen festgelegten Winkel geneigt ist, bei einer Geschwindigkeit bewegt, welche einen konstanten Wert aufweist, welcher gleich einem festgelegten Referenzwert (VREF) ist;

- wenn der Abstand (d), welcher durch den ersten Abstandssensor (S1) detektiert worden ist, kleiner als ein zweiter Referenzwert (R2) ist:
- Aufbringen (803) auf das Boot (200), durch einen oder mehrere Aktuatoren der Mehrzahl von Aktuatoren (104), welche durch die Datenverarbeitungseinheit (101) gesteuert werden, einer zweiten Kraft (F2), welche eine zweite Richtung (v2) von dem Objekt (201) in Richtung des Bootes (200) aufweist, an der Position des ersten Abstandssensors (S1) entlang der Richtung (D1), welche in Bezug auf die Referenzachse (N1, N2) des Bootes (200) um einen festgelegten Winkel geneigt ist, wobei der Schritt eines Aufbringens (803) der zweiten Kraft (F2) einen Schritt eines Modulierens (803') der Intensität der zweiten Kraft (F2) umfasst, so dass diese zunimmt, wenn der relative Abstand (d) zwischen dem ersten Abstandssensor (S1) und dem Objekt (201) abnimmt;
- wenn der Abstand (d), welcher durch den ersten Abstandssensor (S1) detektiert worden ist, größer als ein festgelegter dritter Referenzwert (R3) ist:

- Aufbringen (804) auf das Boot (200), durch einen oder mehrere Aktuatoren der Mehrzahl von Aktuatoren (104), welche durch die Datenverarbeitungseinheit (101) gesteuert werden, einer dritten Kraft (F3), welche die erste Richtung (v1) von dem Boot (200) in Richtung des Objektes (201) aufweist, an der Position des ersten Abstandssensors (S1) entlang der Richtung (D1), welche in Bezug auf die Referenzachse (N1, N2) des Bootes (200) um einen festgelegten Winkel geneigt ist, wobei der Schritt eines Aufbringens (804) der dritten Kraft (F3) einen Schritt eines Modulierens (804') der Intensität der dritten Kraft (F3) umfasst, so dass diese zunimmt, wenn der Abstand (d), welcher zwischen dem ersten Abstandssensor (S1) und dem Objekt (201) detektiert worden ist, zunimmt,

wobei das Verfahren (800) einen weiteren Schritt eines Festlegens (808), durch einen Bediener mittels der Verwendung eines Steuerungspanels (102), welches betriebsmäßig mit der Datenverarbeitungseinheit (101) verbunden ist, des Schrittes eines Aufbringens (802) der ersten Kraft (F1), des Schrittes eines Aufbringens (803) der zweiten Kraft (F2) und des Schrittes eines Aufbringens (804) der dritten Kraft (F3) zu jedem Zeitpunkt während des Anlegemanövers des Bootes (200) umfasst.

2. Verfahren (800) nach Anspruch 1, welches, wenn der Schritt eines Aufbringens (802) der ersten Kraft (F1) ausgeführt wird, ferner einen Schritt eines Unterbrechens (805), durch einen oder mehrere Aktuatoren der Mehrzahl von Aktuatoren (104), welche durch die Datenverarbeitungseinheit (101) gesteuert werden, des Schrittes eines Aufbringens (804) der dritten Kraft (F3) umfasst.

3. Verfahren (800) nach einem der vorhergehenden Ansprüche, welches, wenn der Schritt eines Aufbringens (804) der dritten Kraft (F3) ausgeführt wird, ferner einen Schritt eines Unterbrechens (806), durch einen oder mehrere Aktuatoren der Mehrzahl von Aktuatoren (104), welche durch die Datenverarbeitungseinheit (101) gesteuert werden, des Schrittes eines Aufbringens (802) der ersten Kraft (F1) umfasst.

4. Verfahren (800) nach einem der vorhergehenden Ansprüche, wobei der Schritt eines Aufbringens (803) der zweiten Kraft (F2), durch einen oder mehrere Aktuatoren (104), welche durch die Datenverarbeitungseinheit (101) gesteuert werden, zur gleichen Zeit ausgeführt wird wie der Schritt eines Aufbringens (802) der ersten Kraft (F1).

5. Verfahren (800) nach einem der vorhergehenden Ansprüche von 1 bis 3, wobei der Schritt eines Aufbringens (803) der zweiten Kraft (F2), durch einen oder mehrere Aktuatoren der Mehrzahl von Aktuatoren (104), welche durch die Datenverarbeitungseinheit (101) gesteuert werden, zur gleichen Zeit ausgeführt wird wie der Schritt eines Aufbringens (804) der dritten Kraft (F3).

6. Verfahren (800) nach einem der vorhergehenden Ansprüche, umfassend einen Schritt eines Festlegens (807), durch einen Bediener mittels der Verwendung eines Steuerungspanels (102), welches betriebsmäßig mit der Datenverarbeitungseinheit (101) verbunden ist, des Schrittes eines Aufbringens (802) der ersten Kraft (F1), des Schrittes eines Aufbringens (803) der zweiten Kraft (F2) und des Schrittes eines Aufbringens (804) der dritten Kraft (F3) vor einem Starten des Anlegemanövers des Bootes (200), entweder alternativ oder in Kombination.

7. Verfahren (800) nach einem der vorhergehenden Ansprüche, ferner umfassend einen Schritt eines Unterbrechens (809), durch einen Bediener mittels der Verwendung eines Steuerungspanels (102), welches betriebsmäßig mit der Datenverarbeitungseinheit (101) verbunden ist, des Schrittes eines Aufbringens (802) der ersten Kraft (F1), des Schrittes eines Aufbringens (803) der zweiten Kraft (F2) und des Schrittes eines Aufbringens (804) der dritten Kraft (F3), während des Anlegemanövers des Bootes (200).

8. Verfahren (800) nach einem der vorhergehenden Ansprüche, ferner umfassend einen Schritt eines temporären Deaktivierens (810), durch einen Bediener mittels der Verwendung eines Steuerungspanels (102), welches betriebsmäßig mit der Datenverarbeitungseinheit (101) verbunden ist, des Schrittes eines Aufbringens (803) der zweiten Kraft (F2), während des Anlegemanövers des Bootes (200), um eine manuelle Steuerung des Bootes (200) durch den Bediener zu erlauben.

9. Verfahren (800) nach einem der vorhergehenden Ansprüche, ferner umfassend einen weiteren Schritt eines temporären Deaktivierens (811), durch einen Bediener mittels der Verwendung eines Steuerungspanels (102), welches betriebsmäßig mit der Datenverarbeitungseinheit (101) verbunden ist, des Schrittes eines Aufbringens (802) der ersten Kraft (F1) und des Schrittes eines Aufbringens (804) der dritten Kraft (F3), während des Anlegemanövers des Bootes (200), um eine manuelle Steuerung des Bootes (200) durch den Bediener zu erlauben.

10. Verfahren (800) nach einem der vorhergehenden Ansprüche, wobei sich das Objekt (201) parallel zu einer jeweiligen Referenzachse (A1) der Manövrierebene (P1) entwickelt, wobei das Verfahren (800) ferner die folgenden Schritte umfasst:

  - Detektieren, durch einen Sensor (107) vom anemometrischen Typ, welcher betriebsmäßig mit der Datenverarbeitungseinheit (101) verbunden ist, einer Geschwindigkeit und einer Richtung des Windes auf der Manövrierebene (P1) in Bezug auf die Referenzachse (N1) des Bootes (200);
  - Bestimmen, durch die Datenverarbeitungseinheit (101), einer Triade aerodynamischer Kräfte und eines Moments an der Manövrierebene (P1) auf Grundlage der Geschwindigkeit und der Richtung des Windes, welcher durch den Sensor (107) vom anemometrischen Typ erfasst worden ist;
  - Aufbringen, durch einen oder mehrere Aktuatoren der Mehrzahl von Aktuatoren (104), welche durch die Datenverarbeitungseinheit (101) gesteuert werden, der Triade aerodynamischer Kräfte und eines Moments an dem ersten Sensor (S1), mittels eines Feedforward-Vorgangs, auf eine oder mehrere aus der ersten Kraft (F1), der zweiten Kraft (F2) und der dritten Kraft (F3).

11. Verfahren (800) nach einem der vorhergehenden Ansprüche, wobei der erste festgelegte Referenzwert (R1) gleich dem zweiten festgelegten Referenzwert (R2) ist.

12. Verfahren (800) nach einem der vorhergehenden Ansprüche von 1 bis 10, wobei sich der erste festgelegte Referenzwert (R1) von dem zweiten festgelegten Referenzwert (R2) unterscheidet.

13. Verfahren (800) nach einem der vorhergehenden Ansprüche, wobei der zweite festgelegte Referenzwert (R2) gleich dem dritten festgelegten Referenzwert (R3) ist.

14. Verfahren (800) nach einem der vorhergehenden Ansprüche von 1 bis 12, wobei sich der zweite festgelegte Referenzwert (R2) von dem dritten festgelegten Referenzwert (R3) unterscheidet.

15. System (100) zum automatischen Steuern des Anlegemanövers eines Bootes (200) in Bezug auf ein Objekt (201), umfassend:

  - eine Datenverarbeitungseinheit (101);
  - ein Steuerungspaneel (102) für einen Bediener, welches betriebsmäßig mit der Datenverarbeitungseinheit (101) verbunden ist;
  - eine Mehrzahl von Abstandssensoren (103; S1-S7), von welchen jeder betriebsmäßig mit der Datenverarbeitungseinheit (101) verbunden ist, wobei jeder Abstandssensor der Mehrzahl von Abstandssensoren (103) dazu eingerichtet ist, einen relativen Abstand (d) zwischen dem Abstandssensor (S1-S7) und dem Objekt (201) entlang einer Richtung zu detektieren, welche in Bezug auf eine Referenzachse (N1, N2) des Bootes (200) um einen festgelegten Winkel geneigt ist,

wobei das System **dadurch gekennzeichnet ist, dass** es ferner eine Mehrzahl von Aktuatoren (104) umfasst, von welchen jeder betriebsmäßig mit der Datenverarbeitungseinheit (101) verbunden ist, wobei jeder Aktuator der Mehrzahl von Aktuatoren (104) dazu eingerichtet ist, eine oder mehrere Kräfte aufzubringen, wobei die Kraft an einer Kraftaufbringungsstelle entsprechend einer Position eines der Abstandssensoren (S1-S7) aufgebracht wird, wobei die Kraft entlang der Richtung aufgebracht wird, welche in Bezug auf die Referenzachse (N1, N2) des Bootes (200) um den festgelegten Winkel geneigt ist, um das Boot (200) zu bewegen, wobei die Datenverarbeitungseinheit (101) dazu eingerichtet ist, die Schritte des Verfahrens (800) zum automatischen Steuern des Anlegemanövers des Bootes (200) in Bezug auf das Objekt (201) gemäß einem der vorhergehenden Ansprüche auszuführen.

16. System (100) nach Anspruch 15, ferner umfassend:

  - wenigstens einen Referenzsensor (105) der Richtung des Bootes (200) an drei Achsen, welche zu der Manövrierebene (P1) gehören, welcher betriebsmäßig mit der Datenverarbeitungseinheit (101) verbunden ist;

- wenigstens einen Referenzsensor (106) der Position des Bootes (200) auf der Manövrierebene (P1), welcher betriebsmäßig mit der Datenverarbeitungseinheit (101) verbunden ist;
- wenigstens einen Umgebungsdetektionssensor (107) vom anemometrischen Typ des Bootes (200), welcher betriebsmäßig mit der Datenverarbeitungseinheit (101) verbunden ist;
- eine Videoeinheit (108), welche betriebsmäßig mit der Datenverarbeitungseinheit (101) verbunden ist und dazu eingerichtet ist, eine 360°-Ansicht der das Boot (200) umgebenden Umgebung zu erfassen.

**Revendications**

1.  Procédé (800) de commande automatique de manœuvre d'amarrage d'un bateau (200) par rapport à un objet (201), ledit bateau (200) étant pourvu d'au moins un capteur de distance (S1-S7) configuré pour détecter la distance relative (d) entre un premier capteur de distance (S1) et l'objet (201) le long d'une direction (D1) inclinée par rapport à un axe de référence (N1, N2) du bateau (200) d'un angle défini, le procédé (800) comprenant les étapes suivantes :

    - détection (801), par le premier capteur de distance (S1), de la distance relative (d) entre le premier capteur de distance (S1) et l'objet (201) le long de la direction (D1) inclinée par rapport à l'axe de référence (N1, N2) du bateau (200) d'un angle défini ;
    - si la distance détectée (d) est supérieure à une première valeur de référence définie (R1) :

        - application (802), au bateau (200), par un ou plusieurs actionneurs parmi une pluralité d'actionneurs (104 ; E1-E3) commandés par une unité de traitement de données (101), d'une première force (F1) ayant une première direction (v1) depuis le bateau (200) jusqu'à l'objet (201) à la position du premier capteur de distance (S1) le long de la direction (D1) inclinée par rapport à l'axe de référence (A1) du bateau (200) d'un angle défini, l'étape d'application (801) comprenant une étape de modulation (802') de l'intensité de la première force (F1) en fonction du taux de changement de la distance relative (d) entre le premier capteur de distance (S1) et l'objet (201) de manière à s'assurer que le bateau (200) se déplace le long de la direction (D1) inclinée par rapport à l'axe de référence (N1, N2) du bateau (200) d'un angle défini, à une vitesse ayant une valeur constante égale à une valeur de référence définie (VREF) ;

    - si la distance (d) détectée par le premier capteur de distance (S1) est inférieure à une deuxième valeur de référence définie (R2) :

        - application (803), au bateau (200), par un ou plusieurs actionneurs parmi la pluralité d'actionneurs (104) commandés par l'unité de traitement de données (101), d'une deuxième force (F2) ayant une deuxième direction (v2) depuis l'objet (201) vers le bateau (200) à la position du premier capteur de distance (S1) le long de la direction (D1) inclinée par rapport à l'axe de référence (N1, N2) du bateau (200) d'un angle défini, l'étape d'application (803) de la deuxième force (F2) comprenant une étape de modulation (803') de l'intensité de la deuxième force (F2) de sorte qu'elle augmente au fur et à mesure que la distance relative (d) entre le premier capteur de distance (S1) et l'objet (201) diminue ;

    - si la distance (d) détectée par le premier capteur de distance (S1) est supérieure à une troisième valeur de référence définie (R3) :

        - application (804), au bateau (200), par un ou plusieurs actionneurs parmi la pluralité d'actionneurs (104) commandés par l'unité de traitement de données (101), d'une troisième force (F3) ayant la première direction (v1) depuis le bateau (200) vers l'objet (201) à la position du premier capteur de distance (S1) le long de la direction (D1) inclinée par rapport à l'axe de référence (N1, N2) du bateau (200) d'un angle défini, l'étape d'application (804) de la troisième force (F3) comprenant une étape de modulation (804') de l'intensité de la troisième force (F3) de sorte qu'elle augmente au fur et à mesure que la distance (d) détectée entre le premier capteur de distance (S1) et l'objet (201) augmente,

    ledit procédé (800) comprenant en outre une étape de réglage (808), par un opérateur au moyen de l'utilisation d'un panneau de commande (102) relié fonctionnellement à l'unité de traitement de données (101), de l'étape d'application (802) de la première force (F1), l'étape d'application (803) de la deuxième force (F2) et l'étape d'application (804) de la troisième force (F3) à tout instant au cours de la manœuvre d'amarrage du bateau (200).

2.  Procédé (800) selon la revendication 1, si l'étape d'application (802) de la première force (F1) est en cours de réalisation, comprenant en outre une étape d'interruption (805), par un ou plusieurs actionneurs parmi la pluralité d'actionneurs (104) commandés par l'unité de traitement de données (101), de l'étape d'application (804) de la troisième force (F3).

3. Procédé (800) selon l'une quelconque des revendications précédentes, si l'étape d'application (804) de la troisième force (F3) est en cours de réalisation, comprenant en outre une étape d'interruption (806), par un ou plusieurs actionneurs parmi la pluralité d'actionneurs (104) commandés par l'unité de traitement de données (101), de l'étape d'application (802) de la première force (F1).

4. Procédé (800) selon l'une quelconque des revendications précédentes, dans lequel l'étape d'application (803) de la deuxième force (F2) est réalisée, par un ou plusieurs actionneurs (104) commandés par l'unité de traitement de données (101), en même temps que l'étape d'application (802) de la première force (F1).

5. Procédé (800) selon l'une quelconque des revendications 1 à 3, dans lequel l'étape d'application (803) de la deuxième force (F2) est réalisée, par un ou plusieurs actionneurs parmi la pluralité d'actionneurs (104) commandés par l'unité de traitement de données (101), en même temps que l'étape d'application (804) de la troisième force (F3).

6. Procédé (800) selon l'une quelconque des revendications précédentes, comprenant une étape de réglage (807), par un opérateur au moyen de l'utilisation d'un panneau de commande (102) relié fonctionnellement à l'unité de traitement de données (101), de l'étape d'application (802) de la première force (F1), de l'étape d'application (803) de la deuxième force (F2) et de l'étape d'application (804) de la troisième force (F3) avant le début de la manœuvre d'amarrage du bateau (200), soit en alternance soit en combinaison.

7. Procédé (800) selon l'une quelconque des revendications précédentes, comprenant en outre une étape d'interruption (809), par un opérateur au moyen de l'utilisation d'un panneau de commande (102) relié fonctionnellement à l'unité de traitement de données (101), de l'étape d'application (802) de la première force (F1), de l'étape d'application (803) de la deuxième force (F2) et de l'étape d'application (804) de la troisième force (F3) au cours de la manœuvre d'amarrage du bateau (200).

8. Procédé (800) selon l'une quelconque des revendications précédentes, comprenant en outre une étape de désactivation temporaire (810), par un opérateur au moyen de l'utilisation d'un panneau de commande (102) relié fonctionnellement à l'unité de traitement de données (101), de l'étape d'application (803) de la deuxième force (F2) au cours de la manœuvre d'amarrage du bateau (200) pour permettre une commande manuelle du bateau (200) par l'opérateur.

9. Procédé (800) selon l'une quelconque des revendications précédentes, comprenant en outre une étape de désactivation temporaire (811), par un opérateur au moyen de l'utilisation d'un panneau de commande (102) relié fonctionnellement à l'unité de traitement de données (101), de l'étape d'application (802) de la première force (F1) et de l'étape d'application (804) de la troisième force (F3) au cours de la manœuvre d'amarrage du bateau (200) pour permettre une commande manuelle du bateau (200) par l'opérateur.

10. Procédé (800) selon l'une quelconque des revendications précédentes, dans lequel l'objet (201) se développe parallèlement à un axe de référence (A1) respectif du plan de manœuvre (P1), le procédé (800) comprenant en outre les étapes suivantes :

   - détection, par un capteur de type anémométrique (107) relié fonctionnellement à l'unité de traitement de données (101), d'une vitesse et d'une direction du vent sur le plan de manœuvre (P1) par rapport à l'axe de référence (N1) du bateau (200) ;
   - détermination, par l'unité de traitement de données (101), d'une triade de forces aérodynamiques et d'un moment sur le plan de manœuvre (P1) sur la base de la vitesse et de la direction du vent détectées par le capteur de type anémométrique (107) ;
   - application, par un ou plusieurs actionneurs parmi la pluralité d'actionneurs (104) commandés par l'unité de traitement de données (101), de la triade de forces aérodynamiques et du moment au premier capteur (S1) en plus, au moyen d'une action directe, d'une ou plusieurs forces parmi la première force (F1), la deuxième force (F2) et la troisième force (F3).

11. Procédé (800) selon l'une quelconque des revendications précédentes, dans lequel la première valeur de référence définie (R1) est égale à la deuxième valeur de référence définie (R2).

**12.** Procédé (800) selon l'une quelconque des revendications 1 à 10, dans lequel la première valeur de référence définie (R1) est différente de la deuxième valeur de référence définie (R2).

**13.** Procédé (800) selon l'une quelconque des revendications précédentes, dans lequel la deuxième valeur de référence définie (R2) est égale à la troisième valeur de référence définie (R3).

**14.** Procédé (800) selon l'une quelconque des revendications 1 à 12, dans lequel la deuxième valeur de référence définie (R2) est différente de la troisième valeur de référence définie (R3).

**15.** Système (100) de commande automatique de manœuvre d'amarrage d'un bateau (200) par rapport à un objet (201), comprenant :

- une unité de traitement de données (101) ;
- un panneau de commande (102) pour un opérateur, relié fonctionnellement à l'unité de traitement de données (101) ;
- une pluralité de capteurs de distance (103 ; S1-S7), chacun d'eux étant relié fonctionnellement à l'unité de traitement de données (101), chaque capteur de distance parmi ladite pluralité de capteurs de distance (103) étant configuré pour détecter une distance relative (d) entre le capteur de distance (S1-S7) et l'objet (201) le long d'une direction inclinée par rapport à un axe de référence (N1, N2) du bateau (200) d'un angle défini ;
le système étant **caractérisé en ce qu'**il comprend en outre une pluralité d'actionneurs (104), chacun d'eux étant relié fonctionnellement à l'unité de traitement de données (101), chaque actionneur parmi ladite pluralité d'actionneurs (104) étant configuré pour appliquer une ou plusieurs forces, la force étant appliquée à un point d'application de force correspondant à une position de l'un des capteurs de distance (S1-S7), la force étant appliquée le long de la direction inclinée par rapport à l'axe de référence (N1, N2) du bateau (200) de l'angle défini, afin de déplacer le bateau (200),
l'unité de traitement de données (101) étant configurée pour exécuter les étapes du procédé (800) pour commander automatiquement l'étape d'amarrage du bateau (200) par rapport à l'objet (201) selon l'une quelconque des revendications précédentes.

**16.** Système (100) selon la revendication 15, comprenant en outre :

- au moins un capteur de référence (105) de la direction du bateau (200) sur trois axes appartenant au plan de manœuvre (P1), relié fonctionnellement à l'unité de traitement de données (101) ;
- au moins un capteur de référence (106) de la position du bateau (200) sur le plan de manœuvre (P1), relié fonctionnellement à l'unité de traitement de données (101) ;
- au moins un capteur de détection environnementale de type anémométrique (107) du bateau (200), relié fonctionnellement à l'unité de traitement de données (101) ;
- une unité vidéo (108), reliée fonctionnellement à l'unité de traitement de données (101), configurée pour acquérir une vue à 360 degrés de l'environnement entourant le bateau (200).

Fig.1

EP 3 526 650 B1

Fig.2

Fig.3

P1

E3

S1, 103

S6, 103

S4, 103

200

N3,Z

N2,Y

S7, 103

E1

E2

S5, 103

T1

T2

104

S3, 103

S2, 103

N1,X

Fig.4

Fig.5

Fig.6

Fig.7

Fig.8

Fig.9

Fig.10

**EP 3 526 650 B1**

**REFERENCES CITED IN THE DESCRIPTION**

**Patent documents cited in the description**

- EP 2824528 A1

- JP 2005255058 A